# EUROPÄISCHE PATENTSCHRIFT

(11) **EP 1 302 696 B1**
(45) Veröffentlichungstag und Bekanntmachung des Hinweises auf die Patenterteilung: **12.09.2007**
(21) Anmeldenummer: 02014555.3
(22) Anmeldetag: 01.07.2002
(51) Int. Cl.: F16G 13/06

(54) **Gelenkkette**
Pintle chain
Chaîne à maillons articulés

(30) Priorität: 16.10.2001 DE 20116978 U
(43) Veröffentlichungstag der Anmeldung: 16.04.2003
(73) Patentinhaber: JOH. WINKLHOFER & SÖHNE GmbH & Co KG, D-81369 München (DE)
(72) Erfinder: Koschig, Richard, 85354 Freising (DE)
(74) Vertreter: Grünecker, Kinkeldey, Stockmair & Schwanhäusser Anwaltssozietät

(56) Entgegenhaltungen:
- DE-A- 19 822 928
- US-A- 4 623 595
- US-A- 4 995 852
- DATABASE WPI Week 9016 Derwent Publications Ltd., London, GB; AN 1990-120699 XP002197100 & JP 02 072218 A (TAIHO) 12. März 1990 (1990-03-12)
- PATENT ABSTRACTS OF JAPAN Bd. 004, Nr. 123 (M-029), 30. August 1980 (1980-08-30) -& JP 55 079805 A (MITSUBISHI METAL CORP), 16. Juni 1980 (1980-06-16)

## Beschreibung

Die vorliegende Erfindung betrifft eine Gelenkkette mit an Kettengelenken miteinander verbundenen Kettengliedern, wobei jedes Kettengelenk einen Gelenkbolzen und ein diesen umgebendes Gelenklager umfasst.

Solche Gelenkketten sind in der Technik vielfach sowohl als Antriebs- als auch Förderketten im Einsatz. In einer ihrer einfachsten Formen ist eine solche Gelenkkette als Laschenkette ausgestaltet, bei der sich Innen- und Außenkettenglieder abwechseln und die Verbindung über eine Gelenkhülse des Innenkettengliedes und einen durch diese Gelenkhülse durchgesteckten Gelenkbolzen des Außenkettengliedes hergestellt wird. Der Verschleiß einer Kette erfolgt in vielen Fällen innerhalb des Gelenklagers durch die Gleitbewegung des Gelenkbolzens auf der Innenoberfläche des Gelenklagers. Eine große Anzahl an verschiedenen Maßnahmen wurde getroffen, um dieses Verschleißverhalten, das maßgeblich für die Lebensdauer einer Kette ist, nachhaltig zu verbessern. Zum einen wurden konstruktive Maßnahmen ergriffen und zum anderen wurde aufgrund von Werkstoffauswahl bzw. -vergütung versucht, hier eine Besserung zu erzielen. Auch die Schmierung des Gelenklagers spielt im Stand der Technik eine bedeutende Rolle. Viele der bekannten Maßnahmen bringen im Einsatz nicht die gehoffte Wirkung und so haben sich nur wenige Maßnahmen wirklich durchsetzen können. Dennoch ist man weiter bestrebt, die Lebensdauer von Gelenkketten weiter zu verbessern.

Es ist daher die Aufgabe der vorliegenden Erfindung eine Gelenkkette der eingangs genannten Art bereitzustellen, bei der ein gutes Verschleißverhalten vorhanden ist.

Hierzu ist erfindungsgemäß vorgesehen, dass die Gelenkbolzen an ihrer Außenumfangsfläche eine Boridschicht aufweisen und die Gelenklager aus einem Sinterwerkstoff hergestellt sind. Eine solche Materialpaarung bzw. Oberflächenvergütung des Bolzens in Verbindung mit der Werkstoffwahl des Gelenklagers hat es bislang im Stand der Technik nicht gegeben. Lebensdauerversuche haben gezeigt, dass gerade diese Paarung eine beträchtliche Steigerung der Lebensdauer zur Folge hat.

Durch das Borieren entsteht eine Oberflächenschicht, die eine Oberflächenhärte von 1600+400 HV01 aufweist. Vor dem Borieren kann der Grundwerkstoff vergütet werden und eine Härte von 440+60 HV10 aufweisen.

Günstigerweise kann die Schichtdicke der Boridschicht 15 µm bis 17 µm, bevorzugt 30 µm +20 µm, betragen. Es hat sich in Versuchen gezeigt, dass eine solche Schichtdicke zum einen herstellungstechnisch sinnvoll produzierbar ist und zum anderen diese Schichtdicke über die bei Ketten üblichen Lebensdauer eine ausreichende Verschleißminderung bewirkt.

Vorteilhafterweise kann die Boridschicht als Hauptbestandteil Fe₂ B umfassen. Diese Boridform erweist sich als besonders stabil für die gewählten Einsatzzwecke.

Als besonders vorteilhafte Maßnahme hat sich bei einer Variante herausgestellt, wenn der dem Grundwerkstoff zugewandte Schichtgrund der Boridschicht eine Verzahnung aufweist. Die Verzahnung sorgt für eine sichere Verankerung der Schicht im Grundwerkstoff. Herstellungstechnisch ist es möglich, die Größe der Verzahnung zu variieren. Bevorzugt könnte die gemittelte Höhe der Verzahnung in etwa ¼ bis ½ der Schichtdicke entsprechen.

An diese Verzahnung kann sich dann eine Diffusionszone im Grundwerkstoff anschließen, die bereits in bestimmten Mengen Boridkörner umfasst.

Eine sehr einfache und kostengünstige Ausführungsform sieht vor, dass der Grundwerkstoff ein Stahl, bevorzugt ein Einsatzstahl, ist. Ein solcher Grundwerkstoff eignet sich sehr gut für das Borieren zur Erzielung von gewünschten Schichtdicken und Schichtstrukturen.

Bislang hat sich als beste Variante ein Grundwerkstoff herausgestellt, der von einem 16MnCr5 oder 20MnCr5 gebildet ist.

Günstigerweise kann der Werkstoff für das Gelenklager ein gehärteter Sinterwerkstoff auf Stahlbasis sein. Die gehärtete Oberfläche des Gelenklagers trägt nochmals zur Lebensdauersteigerung bei.

Bevorzugt kann der Sinterwerkstoff folgende chemische Zusammensetzung umfassen:
1-4% Ni,
1-3% Cu,
0,5-1,5% Mo,
03-1,0% C und
Rest Fe (Masseanteil in %-Zeichen).

Hier besteht auch die Möglichkeit, dass der pulvermetallurgische Werkstoff in seiner Zusammensetzung über die Schichtdicke und Schichtbreite des Gelenklagers variiert. So könnte z.B. der Kohlenstoffanteil an der Oberfläche für die Härtung höher gewählt sein als im Kern des Gelenklagers.

Nach dem Sintern kann das Gelenklager bevorzugt eine Dichte von >6,2 g/cm³ aufweisen. Viel höhere Dichtewerte zahlen sich in aller Regel nicht aus, da eine gewisse Porosität für bestimmte Einsätze durchaus gewünscht ist.

Die Härte des Gelenklagers ist günstigerweise so eingestellt, dass sie 700+200HV0,1 entspricht.

Des Weiteren kann das Gelenklager mit einem Schmierstoff getränkt sein. Hier bietet sich z.B. ein OY100 der Firma Klüber Lubrication an. Nach dem Tränken mit dem Schmierstoff erfolgt in aller Regel eine Trockenschleuderung, so dass keine übermäßigen Schmierstoffreste an der Oberfläche verbleiben, was zu einem Hafteffekt führen könnte.

Bevorzugt kann das Gelenklager von einer zylindrischen Gelenkhülse gebildet sein. Bei dickeren Kettengliedern kann diese Gelenkhülse auch in das Kettenglied eingepresst werden.

Eine besonders günstige Ausgestaltung sieht vor, dass als Kettenglieder abwechselnd Innen- und Außenkettenglieder vorgesehen sind, die Innenkettenglieder parallele Innenlaschen und diese verbindende Gelenkhülsen (aus dem Sinterwerkstoff) umfassen und die Außenkettenglieder parallele Außenlaschen und diese verbindende Gelenkbolzen (mit der Boridschicht) umfassen. Es handelt sich hierbei um den gängigen Aufbau einer Laschenkette, wie er im Stand der Technik am meisten verwendet wird. Oftmals sind auf den Gelenkhülsen noch Laufrollen angeordnet, die eine Verschleißminderung gegenüber eingreifenden Kettenrädern bieten.

Im Folgenden wird ein Ausführungsbeispiel der vorliegenden Erfindung anhand einer Zeichnung näher erläutert. Es zeigen:
Fig. 1 einen Ausschnitt einer Rollenkette im Vollschnitt,
Fig. 2 die Gelenkhülse aus Fig. 1 im Vollschnitt,
Fig. 3 die Gelenkhülse aus Fig. 1 in einer Vorderansicht,
Fig. 4 einen Gelenkbolzen aus Fig. 1 in einer vergrößerten Darstellung und

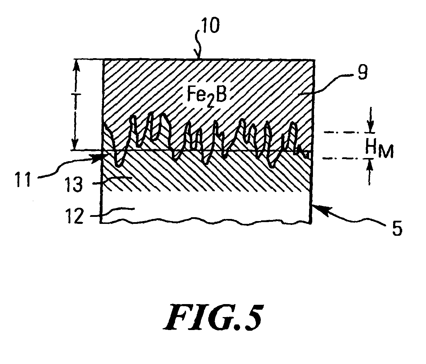

Fig. 5 eine schematische Darstellung der Oberflächenbeschaffenheit des Gelenkbolzens aus Fig. 4 in einer vergrößerten Schnittansicht.

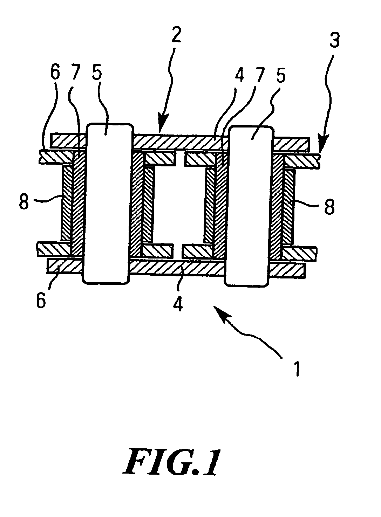

Die in Fig. 1 dargestellte Rollenkette 1 setzt sich zusammen aus abwechselnd aneinander gereihten und miteinander verbundenen Außenkettengliedern 2 und Innenkettengliedern 3. Die Außenkettenglieder umfassen zwei parallel zueinander angeordnete Außenlaschen 4, die über zwei parallel zueinander angeordnete Gelenkbolzen 5 im Abstand miteinander verbunden sind. Die Gelenkbolzen 5 sind jeweils in die Außenlaschen 4 eingepresst.

Die Innenkettenglieder 3 umfassen zwei im Abstand zueinander angeordnete Innenlaschen 6, die über jeweils zwei parallel zueinander angeordnete Gelenkhülsen 7 miteinander verbunden sind. Die Gelenkhülsen 7 sind mit ihren Endbereichen in die Innenlaschen 6 eingepresst und halten diese auf Abstand. Koaxial zu den Gelenkhülsen 7 sind Laufrollen 8 angeordnet, die frei drehbar auf diesen umlaufen. Die Gelenkbolzen 5, Gelenkhülsen 7 und die Laufrollen 8 weisen sämtlich eine Zylinderform oder Zylinderhülsenform auf. Die Außenlaschen 4 und Innenlaschen 6 sind aus Plattenmaterial, insbesondere Stahlmaterial, hergestellt und weisen eine auf diesem Gebiet übliche taillierte Form (nicht dargestellt) auf.

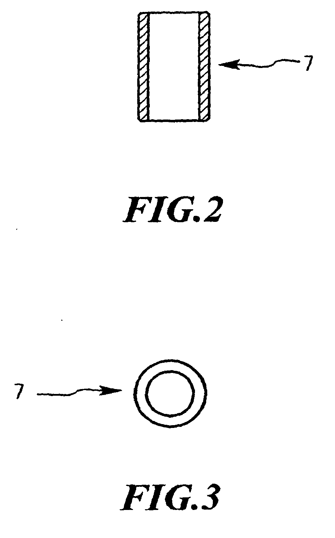

Die in den Fig. 2 und 3 dargestellte Gelenkhülse 7 besteht aus einem Sinterwerkstoff. Dieser Sinterwerkstoff ist auf Stahlbasis aufgebaut und umfasst die chemische Zusammensetzung: 1-4% Nickel, 1-3% Kupfer, 0,5-1,5% Molybdän, 0,3-1,0% Kohlenstoff und Rest Eisen (Masseanteile in Prozent). Der Sintervorgang erfolgt so, dass die Dichte der Gelenkhülse größer > 6,2 g/cm³ ist. Eine gewisse Porosität des Sinterwerkstoffs ist sogar erwünscht, damit dieser mit einem Schmierstoff getränkt werden kann. Die Schmierstofftränkung erfolgt mit dem Schmierstoff OY100 der Firma Klüber Lubrication. Nach der Tränkung mit diesem Schmierstoff, insbesondere durch Aufbringung eines Vakuums, erfolgt die Trockenschleuderung, damit kein überschüssiger Schmierstoff an den Außenflächen der Gelenkhülse 7 anhaftet. Die vorliegende Gelenkhülse 7 ist gehärtet. Aufgrund der Dünnwandigkeit erfolgt eine Durchhärtung. Die Härte beträgt nach diesem Vorgang 700+200 HV0,1. Ein Anlassen erfolgt nicht. Hierdurch ergibt sich für den Einbauzustand eine Zugfestigkeit und Streckgrenze von 450 bis 500 N/qmm. Die Bruchdehnung beträgt in diesem gehärteten Zustand maximal 1%. Die Dichte beträgt wegen der gewünschten Porosität maximal 6,6 g/cm³ und bevorzugt im Mittel 6,4 g/cm³.

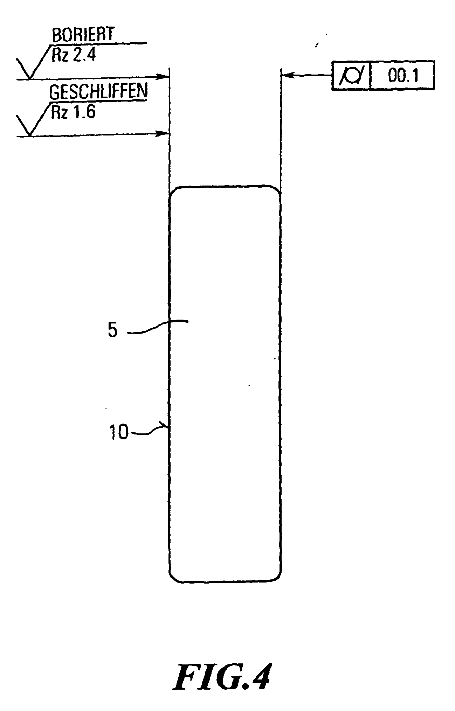

Der in Kombination mit dieser Gelenkhülse 7 aus Sinterwerkstoff verwendete und in Fig. 4 dargestellte Gelenkbolzen 5 besteht aus einem Einsatzstahl, hier einem 16MnCr5. Auch die Verwendung eines 20MnCr5 ist denkbar. In der Produktion wird der Gelenkbolzen mit Rz1,6 vorgeschliffen, mit einer Rundlaufgenauigkeit von 0,01 mm. Anschließend erfolgt ein Borieren, so dass eine Boridschicht 9 an der Außenmanteloberfläche 10 gebildet ist. Nach dem Borieren beträgt die Oberflächenrauigkeit Rz2,4.

Die Boridschicht mit der mittleren Schichtdicke T besteht hauptsächlich auch Fe₂B. Es kann von einer geschlossenen Oberflächenschicht gesprochen werden. Der Grund der Boridschicht 9 weist eine Verzahnung 11 auf, mit der eine stabile Verankerung im Grundwerkstoff 12 erreicht wird. Diese Verzahnung 11 ist durch geeignete Verfahrensparameter erzielbar. Die gemittelte Höhe H_{M} der Verzahnung 11 beträgt etwa 1/3 der Schichtdicke T der Boridschicht 9. Bevorzugt wird diese Verzahnungshöhe H_{M} zwischen 0,25 bis 0,5 der Schichtdicke T eingestellt. An diese Verzahnung 11 schließt sich eine Diffusionszone 13, in der bereits vereinzelte Boridkörner vorhanden sind, wobei diese mit zunehmender Tiefe abnehmen, so dass die Diffusionszone 13 in den Grundwerkstoff 12 übergeht. Die Schichtdicke T beträgt ca. 30 µm mit einer Toleranz von +20µm. Nach dem Borieren ist eine Oberflächenhärte von 1600+400 HV01 vorhanden. Durch ein Vergüten beträgt KHV 400+60HV10.

Die Kombination des Gelenkaufbaus bestehend aus Gelenkhülse 7, aus dem erwähnten Sintermaterial und dem entsprechend oberflächenbehandelten Gelenkbolzen 5 ergibt ein Verschleißverhalten, das außerordentlich gut ist.

## Patentansprüche

1. Gelenkkette (1) mit an Kettengelenken miteinander verbundenen Kettengliedern (2,3), wobei jedes Kettengelenk einen Gelenkbolzen (5) und ein diesen umgebendes Gelenklager (7) umfasst, und die Gelenkbolzen (5) an ihrer Außenumfangsfläche (10) eine Boridschicht (9) aufweisen und die Gelenklager (7) aus einem Sinterwerkstoff hergestellt sind, **dadurch gekennzeichnet, dass** der dem Grundwerkstoff (12) zugewandete Schichtgrund der Boridschicht (9) eine Verzahnung (11) aufweist.

2. Gelenkkette (1) nach Anspruch 1, **dadurch gekennzeichnet, dass** die Schichtdicke (T) der Boridschicht (9) 15µm bis 70µm, bevorzugt +30µm + 20 µm, beträgt.

3. Gelenkkette (1) nach Anspruch 1 oder 2, **dadurch gekennzeichnet, dass** die Boridschicht (9) als Hauptbestandteil Fe₂B umfasst.

4. Gelenkkette (1) nach einem der Ansprüche 1 bis 3, **dadurch gekennzeichnet, dass** sich an die Verzahnung (11) eine Diffusionszone (13) im Grundwerkstoff (12) anschließt.

5. Gelenkkette (1) nach einem der Ansprüche 1 bis 4, **dadurch gekennzeichnet, dass** der Grundwerkstoff (12) ein Stahl, bevorzugt ein Einsatzstahl, ist.

6. Gelenkkette (1) nach Anspruch 5, **dadurch gekennzeichnet, dass** der Grundwerkstoff (12) ein 16MnCr5 oder 20MnCr5 ist.

7. Gelenkkette (1) nach einem der Ansprüche 1 bis 6, **dadurch gekennzeichnet, dass** der Werkstoff für das Gelenklager (7) ein gehärteter Sinterwerkstoff auf Stahlbasis ist.

8. Gelenkkette (1) nach Anspruch 7, **dadurch gekennzeichnet, dass** der Sinterwerkstoff folgende chemische Zusammensetzung umfasst:
1-4% Nickel,
1-3% Kupfer,
0,5-1,5% Molybdän,
0,3-1,0% Kohlenstoff und
Rest Eisen (Masseanteile in Prozent).

9. Gelenkkette (1) nach einem der Ansprüche 1 bis 8, **dadurch gekennzeichnet, dass** das Gelenklager (7) eine Dichte von > 6,2 g/cm³ aufweist.

10. Gelenkkette (1) nach einem der Ansprüche 1 bis 9, **dadurch gekennzeichnet, dass** das Gelenklager (7) eine Härte von 700+200 HV0, 1 aufweist.

11. Gelenkkette (1) nach einem der Ansprüche 1 bis 10, **dadurch gekennzeichnet, dass** das Gelenklager (7) mit einem Schmierstoff getränkt ist.

12. Gelenkkette (1) nach einem der Ansprüche 1 bis 11, **dadurch gekennzeichnet, dass** das Gelenklager (7) von einer zylindrischen Gelenkhülse (7) gebildet ist.

13. Gelenkkette (1) nach Anspruch 12, **dadurch gekennzeichnet, dass** als Kettenglieder abwechselnd Innen- und Außenkettenglieder (2,3) vorgesehen sind, die Innenkettenglieder (3) parallele Innenlaschen (6) und diese verbindende Gelenkhülsen (7) und die Außenkettenglieder (2) parallele Außenlaschen (4) und diese verbindenden Gelenkbolzen (5) umfassen.

## Claims

1. An articulated chain (1) comprising chain links (2, 3) interconnected at chain hinges, wherein each chain hinge comprises a hinge pin (5) and a hinge bearing (7) surrounding said hinge pin (5), and wherein the hinge pins (5) are provided with a borided layer (9) on the outer circumferential surface (10) thereof and the hinge bearings (7) are produced from a sintered material, **characterized in that** the layer bottom of the borided layer (9) is provided with teeth (11), said layer bottom facing the base material (12).

2. An articulated chain (1) according to claim 1**, characterized in that** the layer thickness (T) of the borided layer (9) lies between 15 µm and 70 µm, and preferably between 30 µm and 20 µm.

3. An articulated chain (1) according to claim 1 or 2, **characterized in that** the borided layer (9) comprises Fe₂B as a main component.

4. An articulated chain (1) according to one of the claims 1 to 3, **characterized in that** the teeth (11) are followed by a diffusion zone (13) in the base material (12).

5. An articulated chain (1) according to one of the claims 1 to 4, **characterized in that** the base material (12) is a steel, preferably a case-hardening steel.

6. An articulated chain (1) according to claim 5, **characterized in that** the base material (12) is a 16MnCr5 or a 20MnCr5.

7. An articulated chain (1) according to one of the claims 1 to 6, **characterized in that** the material for the hinge bearing (7) is a hardened sintered material on a basis of steel.

8. An articulated chain (1) according to claim 7, **characterized in that** the sintered material has the following chemical composition:
1-4% nickel,
1 - 3% copper,
0.5 - 1.5% molybdenum,
0.3 - 1.0 % carbon and
balance iron (mass percentages in %).

9. An articulated chain (1) according to one of the claims 1 to 8, **characterized in that** the hinge bearing (7) has a density of > 6.2 g/cm³.

10. An articulated chain (1) according to one of the claims 1 to 9, **characterized in that** the hinge bearing (7) has a hardness of 700+200 HVO.1.

11. An articulated chain (1) according to one of the claims 1 to 10, **characterized in that** the hinge bearing (7) is impregnated with a lubricant.

12. An articulated chain (1) according to one of the claims 1 to 11, **characterized in that** the hinge bearing (7) is defined by a cylindrical hinge sleeve (7).

13. An articulated chain (1) according to claim 12, **characterized in that** the chain links provided are alternating inner and outer chain links (2, 3), the inner chain links (3) comprising parallel inner link plates (6) and hinge sleeves (7) interconnecting the same and the outer chain links (2) comprising parallel outer link plates (4) and hinge pins (5) interconnecting the same.

## Revendications

1. Chaîne articulée (1) comportant des éléments de chaîne (2, 3) reliés les uns aux autres au niveau d'articulations de chaîne, chaque articulation de chaîne comportant un axe d'articulation (5) et une rotule (7) entourant celui-ci, et les axes d'articulation (5) présentant, au niveau de leur surface périphérique externe (10), une couche de borure (9), et les rotules (7) étant réalisées dans un matériau fritté, **caractérisée en ce que** le fond de couche, orienté vers le matériau de base (12), de la couche de borure (9) présente une denture (11).

2. Chaîne articulée (1) selon la revendication 1, **caractérisée en ce que** l'épaisseur de couche (T) de la couche de borure (9) est comprise entre 15 µm et 70 µm, de préférence entre +30 µm et +20 µm.

3. Chaîne articulée (1) selon la revendication 1 ou 2, **caractérisée en ce que** la couche de borure (9) comporte, comme composant principal, du Fe₂B.

4. Chaîne articulée (1) selon l'une quelconque des revendications 1 à 3, **caractérisée en ce qu'**une zone de diffusion (13) réalisée dans le matériau de base (12) est adjacente à la denture (11).

5. Chaîne articulée (1) selon l'une quelconque des revendications 1 à 4, **caractérisée en ce que** le matériau de base (12) est un acier, de préférence un acier de cémentation.

6. Chaîne articulée (1) selon la revendication 5, **caractérisée en ce que** le matériau de base (12) est du 16MnCr5 ou 20MnCr5.

7. Chaîne articulée (1) selon l'une quelconque des revendications 1 à 6, **caractérisée en ce que** le matériau destiné à la rotule (7) est un matériau fritté durci, à base d'acier.

8. Chaîne articulée (1) selon la revendication 7, **caractérisée en ce que** le matériau fritté présente la composition chimique suivante:
1 à 4 % de nickel,
1 à 3 % de cuivre,
0,5 à 1,5 % de molybdène,
0,3 à 1,0 % de carbone,
le reste étant du fer (proportion de masse en pourcentage).

9. Chaîne articulée (1) selon l'une quelconque des revendications 1 à 8, **caractérisée en ce que** la rotule (7) a une épaisseur > 6,2 g/cm³.

10. Chaîne articulée (1) selon l'une quelconque des revendications 1 à 9, **caractérisée en ce que** la rotule (7) a une dureté de 700 + 200 HV0,1.

11. Chaîne articulée (1) selon l'une quelconque des revendications 1 à 10, **caractérisée en ce que** la rotule (7) est imprégnée d'un lubrifiant.

12. Chaîne articulée (1) selon l'une quelconque des revendications 1 à 11, **caractérisée en ce que** la rotule (7) est formée par un manchon d'articulation (7) cylindrique.

13. Chaîne articulée (1) selon la revendication 12, **caractérisée en ce que**, comme éléments de chaîne, on prévoit de manière alternée des éléments de chaîne interne et externe (2, 3), les éléments de chaîne internes (3) comportant des languettes internes (6) parallèles et des manchons d'articulation (7) reliant celles-ci, et les éléments de chaîne externes (2) comportant des languettes externes (4) parallèles et des axes d'articulation (5) reliant celles-ci.
